# EUROPÄISCHE PATENTSCHRIFT

(11) **EP 3 555 390 B1**
(45) Veröffentlichungstag und Bekanntmachung des Hinweises auf die Patenterteilung: **19.07.2023**
(21) Anmeldenummer: 17823060.3
(22) Anmeldetag: 11.12.2017
(51) Int. Cl.: E04H 12/16, E04H 12/34, F03D 13/20, E04H 12/12

(54) **VERFAHREN ZUM AUFSTELLEN EINES WINDENERGIEANLAGENTURMS AUS SPANNBETON SOWIE ENTSPRECHENDER WINDENERGIEANLAGENTURM**
METHOD FOR ERECTING A WIND TURBINE TOWER FROM PRESTRESSED CONCRETE AND CORRESPONDING WIND TURBINE TOWER
PROCÉDÉ POUR CONSTRUIRE UNE TOUR D'ÉOLIENNE EN BÉTON PRÉCONTRAINT, ET TOUR D'ÉOLIENNE CORRESPONDANTE

(30) Priorität: 14.12.2016 DE 102016014847
(43) Veröffentlichungstag der Anmeldung: 23.10.2019
(73) Patentinhaber: Siemens Gamesa Renewable Energy Service GmbH, 20097 Hamburg (DE)
(72) Erfinder: FROST, Bernd, 25551 Winseldorf (DE)
(74) Vertreter: Glawe, Delfs, Moll
(86) Internationale Anmeldenummer: PCT/EP2017/082230
(87) Internationale Veröffentlichungsnummer: WO 2018/108818

(56) Entgegenhaltungen:
- EP-A1- 2 339 094
- WO-A1-2011/006526
- WO-A1-2014/037421
- JP-A- 2007 046 292

## Beschreibung

Die Erfindung betrifft ein Verfahren gemäß Anspruch 1 zum Aufstellen eines Windenergieanlagenturms auf einem Fundamentkörper, wobei eine Turmwandung zumindest teilweise Spannbeton umfasst und mittels Spanngliedern und Spannankern auf einem Fundamentkörper befestigt wird. Die Erfindung erstreckt sich ferner auf einen entsprechenden Windernergieanlagenturm gemäß Anspruch 12.

Türme von Windenergieanlagen werden häufig zumindest teilweise aus Spannbeton hergestellt. Seit einiger Zeit werden beispielsweise Hybridtürme bei Windenergieanlagen eingesetzt, bei denen der obere Turmteil aus einem Stahlrohrturm und der untere Turmteil aus einem Betonturm bestehen. Hierbei kann es sich um vor Ort hergestellten Beton (Ortbeton) handeln oder um angelieferte Fertigteile, die auf der Baustelle dann zusammengesetzt und verspannt werden. Bei Spannbeton ist es wesentlich, zur Aufrechterhaltung einer Druckbelastung auf dem Beton die zum Spannbeton gehörenden Spannglieder ausreichend vorzuspannen.

Errichten eines Turms bestehend aus mehreren Turmsegmenten, die im Ausgangszustand als koaxiale, ineinander gesteckte Teleskopabschnitte ausgebildet sind, ist aus der WO 2011/006526 A1 bekannt. Über eine Hebeeinrichtung werden die Turmsegmente nacheinander in ihre jeweilige Endposition angehoben, und das untere Ende eines angrenzenden oberen Turmsegments wird jeweils mit dem oberen Ende des angrenzenden unteren Turmsegments verbunden. Dazu sind Spannglieder vorgesehen, die immer zwei angrenzende Turmsegmente auf kurzem Weg verbinden. Im Ergebnis entsteht eine sich nach oben verjüngende Turmwandung, bei der ein einziges, nämlich das unterste Segment auf dem Fundamentkörper aufsteht. Ein ähnliches Konzept ist bekannt aus der JP 2007-046292 A, die ebenfalls die Errichtung eines Turms bestehend aus übereinander angeordneten Turmsegmenten offenbart. Auf einem Fundament wird ein unteres Ringsegment angeordnet, und darauf werden nacheinander die weiteren Turmsegmente aufgesetzt. Wie auch bei dem zuvor genannten Dokument werden immer zwei angrenzende Turmsegmente miteinander über Spannglieder gespannt. Auf dem Fundamentkörper steht lediglich ein Turmsegment, nämlich das unterste.

Durch das Vorspannen des Betonturmes wird sichergestellt, dass die Querschnittsfläche des Betons auch bei anstehender Windbelastung jedenfalls teilweise überdrückt bleibt. Auf diese Weise lässt sich eine unzulässige Rissbildung im Beton vermeiden sowie die für die Funktionsweise der Windenergieanlage erforderliche Biegesteifigkeit des Turmes herstellen.

Zur Gewährleistung einer ausreichenden Vorspannung werden die Spannglieder oben und unten am Turm durch Festanker bzw. Spannanker im Beton befestigt. Die Spannglieder verlaufen hierbei etwa in Richtung der Turmachse. Es ist an sich unerheblich, ob die Festanker unten und die Spannanker oben oder ob die Festanker oben und die Spannanker unten angeordnet sind. Um aber unnötige Arbeitsschritte in großer Höhe, welche den Einsatz von Hebebühnen erforderlich machen würde, zu ersparen, werden vorzugsweise die Spannanker unten angeordnet. Hierzu kommen besonders gestaltete Fundamentkörper zur Anwendung. Die Fundamentkörper weisen einen Hohlraum auf (Fundamentkeller) zur Anordnung der Spannanker. Diese Konstruktion, wie beispielsweise bekannt aus der EP 2 339 094 A1 oder der WO 2014/037421 A1, ist bewährt und gewährleistet einen ausreichenden Zugang zu den Spannankern. Allerdings wird das Herstellen eines Fundamentkörpers erheblich kompliziert durch die Schaffung des Fundamentkellers. Dies führt zu erheblichem Mehraufwand.

Es ist die Aufgabe der Erfindung, ein verbessertes Verfahren zum Aufstellen eines Windenergieanlagenturms zu schaffen welches mit einem einfacher gestalteten Fundamentkörper auskommt, sowie einen entsprechenden Windenergieanlagenturm.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Aufstellen eines Windenergieanlagenturms auf einem Fundamentkörper, wobei der Windenergieanlagenturm zumindest teilweise als Betonturm mit einer Turmwandung aus Spannbeton ausgeführt ist und mittels Spanngliedern und Spannankern auf einer Oberseite des Fundamentkörpers befestigt wird, ist erfindungsgemäß vorgesehen ein Herstellen des Fundamentkörpers, Erstellen einer zur Turmwandung benachbarten Ringwand auf dem Fundamentkörper, wobei die Ringwand einen umlaufenden Nischenkranz mit einer Mehrzahl von Nischen aufweist, Einbringen der Spannglieder in die Ringwand derart, dass die unteren Enden in die Nischen ragen, Ansetzen von Spannankern in den Nischen, und Spannen von Spannglied und Spannankern nach Errichten des Betonturms.

Kern der Erfindung ist der Gedanke, mittels der Ringwand mit Nischenkranz eine Art umgedrehte Zinnenwand zu schaffen (mit nach unten ragenden Zinnen und dazwischen angeordneten "Zinnenfenstern" als Freiräume). Hierbei bilden die Nischen des Nischenkranzes die Zinnenfenster. In diese Zinnenfenster ragen die Spannglieder mit ihrem unteren Ende. Dadurch wird zweierlei erreicht: zum einen sind die Enden der Spannglieder gut zugänglich zur Montage und Betätigung der Spannanker, und zum anderen geschieht dies auf Höhe der Ringwand, also oberhalb der Oberseite des Fundamentkörpers. Ein unterhalb der Oberseite des Fundamentkörpers liegender Fundamentkeller wie im Stand der Technik wird daher nicht benötigt, sodass dessen aufwändige Herstellung dank der Erfindung vermieden werden kann.

Durch den Entfall des Fundamentkellers vereinfacht sich die Erstellung des Fundaments beträchtlich, wodurch der Aufwand entsprechend sinkt. Zum anderen wird aber auch die Montage vereinfacht, da nunmehr die Spannanker nicht mehr umständlich im eher schwierig zugänglichen Fundamentkeller zu montieren sind, sondern dies wesentlich einfacher und bequemer oberhalb des Fundaments praktisch auf ebenerdigem Niveau erfolgen kann. Dies stellt nicht nur unter Handhabungsaspekten eine beträchtliche Vereinfachung dar, sondern bietet auch erhebliche Sicherheitsvorteile.

Vorzugsweise ist ein Verankern der Ringwand mittels einer Rückhängebewehrung auf dem Fundamentkörper vorgesehen, wobei weiter vorzugsweise die Rückhängebewehrung und die Nischen abwechselnd angeordnet sind. Mittels der Rückhängebewehrung wird eine formschlüssige Verbindung zwischen Ringwand und Fundamentkörper geschaffen, sodass eine gute Krafteinleitung in dem Fundamentkörper gewährleistet ist. Dies gilt insbesondere dann, wenn die Rückhängebewehrung abwechselnd mit den Nischen angeordnet ist. Dadurch ist sichergestellt, dass die Abstände zwischen den Spanngliedern und der Rückhängebewehrung klein sind, was wiederum einen günstigen Lastfluss sicherstellt. Zweckmäßigerweise wird die Rückhängebewehrung bereits bei der Erstellung des Fundamentkörpers eingebracht. Dies geschieht in der Weise, dass die Rückhängebewehrung mit ihrem unteren Bereich in den Fundamentkörper eingebaut wird. Vorzugsweise kann sie hierbei mit der ohnehin im Fundamentkörper vorgesehenen Bewehrung verbunden sein. Die Ringwand kann als Fertigbetonteil ausgeführt werden, wobei dann beim Aufsetzen der Ringwand auf die Oberseite des Fundamentkörpers das obere Ende der Rückhängebewehrung in eine Aussparung in der Ringwand eingeführt wird. Diese Aussparung in der Ringwand weist vorzugsweise eine Verbindung zur Oberseite der Ringwand auf, so dass ein Vergießen mit Gussbeton von oben erfolgen kann. Es kann aber umgekehrt auch so vorgegangen werden, dass vertikale Aussparungen, insbesondere Köcher, bei der Herstellung des Fundamentkörpers in dem Bereich unterhalb der Ringwand freigelassen werden. Bei dem Aufstellen der Ringwand wird dann die Rückhängebewehrung von oben in die Köcher eingeführt und dann in den Köchern fixiert, beispielsweise durch das Vergießen mit Gussbeton. Dies hat den Vorteil, dass sämtliche Arbeiten von oben erfolgen können. Ferner bietet das Verfahren den Vorteil, dass die Rückhängebewehrung in der Ringwand vormontiert sein kann. Es kann dann die Ringwand mit der Rückhängebewehrung als Ganzes auf dem Fundamentkörper abgesetzt und dabei die Rückhängebewehrung in die Köcher eingelassen werden. Es wird somit also ein hoher Grad an Vormontage ermöglicht, so dass die Arbeiten auf der Baustelle minimiert werden können.

Häufig wird die Ringwand rund ausgeführt sein. Jedoch ist dies nicht zwingend. Sie kann auch eckig, insbesondere polygonal ausgeführt sein. Die Ringwand braucht jedoch nicht zwingend eine geschlossene Wandung zu sein. So kann sie in mehrere Segmente unterteilt sein, wobei vorzugsweise zwischen den Segmenten Lücken gebildet sind. Die Breite der Lücken ist hierbei an sich durch die Erfindung nicht begrenzt, sie wird vielmehr durch die Statik des Spannbetontragwerkes vorgegeben.

Optional können die Nischen als Durchgangsöffnungen ausgeführt sein. Darunter wird verstanden, dass sich die Nischen über die gesamte Breite der Wand erstrecken. Das vereinfacht die Herstellung der Ringwand. Allerdings ist dies nicht zwingend.

Mit Vorteil ist in der Ringwand eine Aussparung für eine Zutrittsöffnung gebildet. Sie ist zweckmäßigerweise so angeordnet, dass sie mit einer Zutrittstür zum Turm der Windenergieanlage fluchtet. Damit ist ein problemloser Zugang zum Inneren des Turms gewährleistet.

Zur Vereinfachung der Montage ist zweckmäßigerweise das Verwenden einer Schalung für die Ringwand vorgesehen, die kombiniert ist mit einer Schablone zum Montieren der Spannanker. Die Schalung dient insbesondere zur Herstellung der Nischen. Da in den Nischen auch die Spannglieder erfindungsgemäß enden sollen, ist die Kombination mit einer Schablone zum Montieren der Spannanker, welche auf die Spannglieder aufzubringen sind, besonders vorteilhaft.

Mit Vorteil sind die Abmessungen und die Form der Nischen so gewählt, dass sie angepasst sind an ein Spannwerkzeug für die Spannanker. Durch eine passende Gestaltung der Nischen wird das Ansetzen der Spannwerkzeuge sowie deren Betätigung beträchtlich vereinfacht. Es kann sich so eine erhebliche Arbeitsvereinfachung ergeben. Dies gilt insbesondere verglichen mit dem aus dem Stand der Technik bekannten Fall, wo im eher beengten Fundamentkeller unter schwierigen Bedingungen gearbeitet werden muss. Die Erfindung ermöglicht diesbezüglich eine erhebliche Verbesserung.

Zweckmäßigerweise wird der Betonturm aus Fertigteilen erstellt, und zwar vorzugsweise über die gesamte Höhe des Betonturmes. Die Erstellung aus Fertigteilen bietet den Vorteil, dass sie besonders rationell ist und nur wenig Aufwand auf der Baustelle verlangt. Insoweit bildet dies eine konsequente Fortsetzung des erfindungsgemäßen Konzepts, durch eine beträchtliche Vereinfachung der Gestaltung des Fundamentkörpers die erforderlichen Arbeiten auf der Baustelle zu minimieren.

Ferner kann vorgesehen sein, dass die Ringwand mit einem unteren Segment des Betonturmes kombiniert wird. Dies stellt eine weitere Vereinfachung dar, insbesondere dann, wenn vormontierte Segmente verwendet werden. Die erforderlichen Arbeiten auf der Baustelle verringern sich dadurch weiter.

Die Erfindung erstreckt sich ferner auf einen entsprechenden Windenergieanlagenturm mit einer Ringwand mit einem umlaufenden Nischenkranz. Zur näheren Erläuterung wird auf vorstehende Beschreibung verwiesen.

Die Erfindung wird nachfolgend unter Bezugnahme auf die beigefügte Zeichnung anhand eines Ausführungsbeispiels näher erläutert. Es zeigen:
- Fig. 1: eine Schemadarstellung einer Windenergieanlage gemäß einem Ausführungsbeispiel der Erfindung auf einem Fundament;
- Fig. 2: einen horizontalen Querschnitt durch einen unteren Bereich der Wandung des Turms der Windenergieanlage mit darin angeordneter Ringwand;
- Fig. 3: eine Innenansicht eines Teils der Ringwand;
- Fig. 4: einen Querschnitt eines Fundamentkörpers für die Windenergieanlage oder
- Fig. 5: eine Querschnittsdarstellung des Fundamentkörpers mit Ringwand;
- Fig. 6: eine Schnittdarstellung entlang der Linie VI-VI aus Figur 2;
- Fig. 7: eine Schnittdarstellung entlang der Linie VII-VII aus Figur 2;

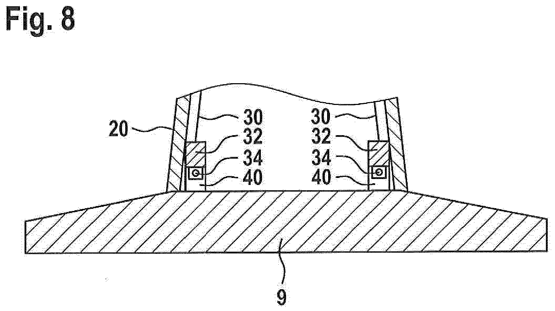

- Fig. 8: eine Schnittdarstellung entlang der Linie VII-VII mit angesetzter Spannpresse; und
- Fig. 9: eine Variante der Erfindung mit an der Ringwand hängender Rückhängebewehrung zur Aufnahme in den Köchern des Fundamentkörpers.

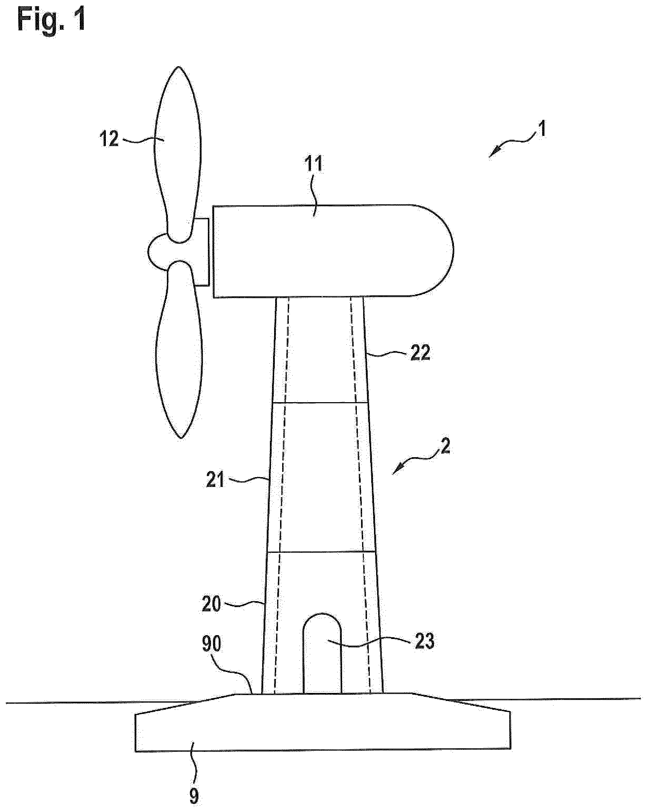

Zur Erläuterung eines Ausführungsbeispiels der Erfindung wird Bezug genommen auf eine Windenergieanlage 1, wie sie schematisch in Figur 1 dargestellt ist. Sie umfasst einen Turm 2, an dessen oberem Ende eine Gondel 11 mit einem Windrotor 12 an einer Stirnseite der Gondel vorgesehen ist. Der Turm 2 ist aus mehreren Teilen aufgebaut, einem unteren Turmring 20 sowie weiteren Turmringen 21, 22. Der Turm 2 ist in Spannbeton ausgeführt, und es sind mehrere vertikal im Turm 2 verlaufende Spannglieder 30 vorgesehen. Sie sind in Figur 1 schematisch durch gestrichelte Linien dargestellt. Die Windenergieanlage 1 ist mit ihrem Turm 2 auf einem Fundamentkörper 9 angeordnet. Dazu steht der untere Turmring 20 des Turms 2 auf einer Oberseite 90 des Fundamentkörpers 9 auf.

Innerhalb einer Wandung 24 des unteren Turmsegments 20 ist eine Ringwand 4 vorgesehen. Die Ringwand 4 ist dicht an die Innenseite der Wandung 24 des unteren Turmsegments 20 angeordnet. Die Ringwand 4 weist eine Durchbrechung 44 auf, die in einer Flucht mit einem Türausschnitt 23 im unteren Turmsegment angeordnet ist.

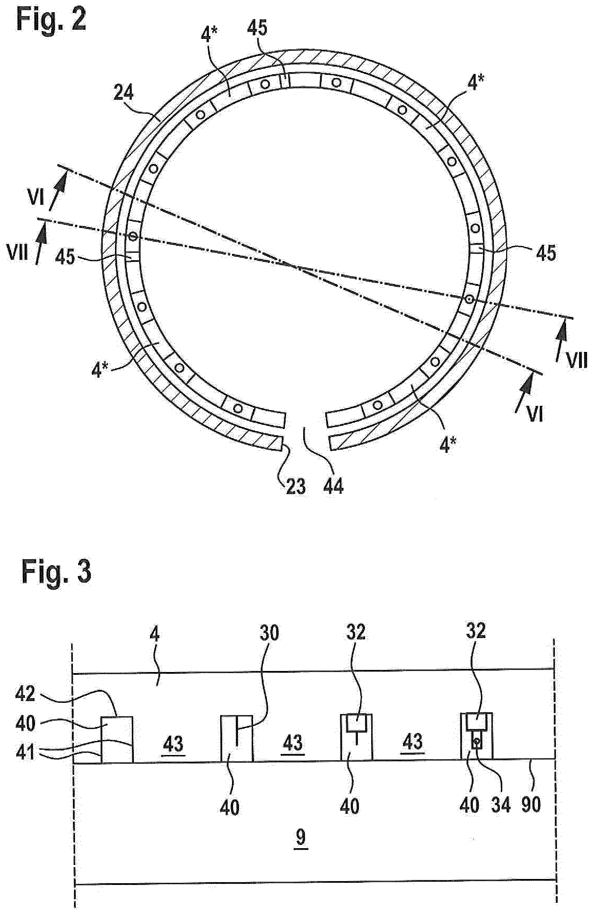

Die Ringwand 4 erstreckt sich in ihrer Höhe über einen Teil der Höhe des unteren Turmsegments 20, sie kann dieses aber auch überragen. Die Ringwand 4 weist in ihrem funktionalen Bereich mehrere regelmäßig angeordnete Nischen 40 auf. Die Nischen 40 sind zur Seite hin begrenzt durch zwei Seitenflanken 41 und nach oben hin durch eine Deckfläche 42. Zwischen benachbarten Nischen 40 ist jeweils ein Wandfuß 43 vorgesehen, über den die Ringwand 4 auf der Oberseite 90 des Fundamentkörpers 9 aufsteht. Die Ringwand 4 ähnelt damit in ihrer Geometrie einer auf dem Kopf stehenden Zinnenmauer. Die Nischen 40 sind dazu ausgestaltet, um die Spannglieder 30 mit ihrem unteren Ende aufzunehmen. Vorzugsweise enden die Spannglieder 30 in den Nischen 40, sei es durch eine entsprechende Wahl der Länge der Spannglieder 30 oder durch ein Abschneiden der Spannglieder 30 oberhalb der Oberseite 90 des Fundamentkörpers 9. Diese Anordnung der Spannglieder 30 ist schematisch in der zweiten Nische 40 von links in Figur 3 dargestellt. In der dritten Nische 40 von links ist zusätzlich noch ein auf das untere Ende des Spanngliedes 30 aufgesetzter Spannanker 32 dargestellt. In der vierten Nische von links (mithin in der ganz rechten Nische 40) ist ferner eine Spannpresse 34 für das jeweilige Spannglied 30 dargestellt. Diese Darstellungen stehen für verschiedene Phasen bei der Erstellung und Benutzung einer erfindungsgemäßen Ringwand 4.

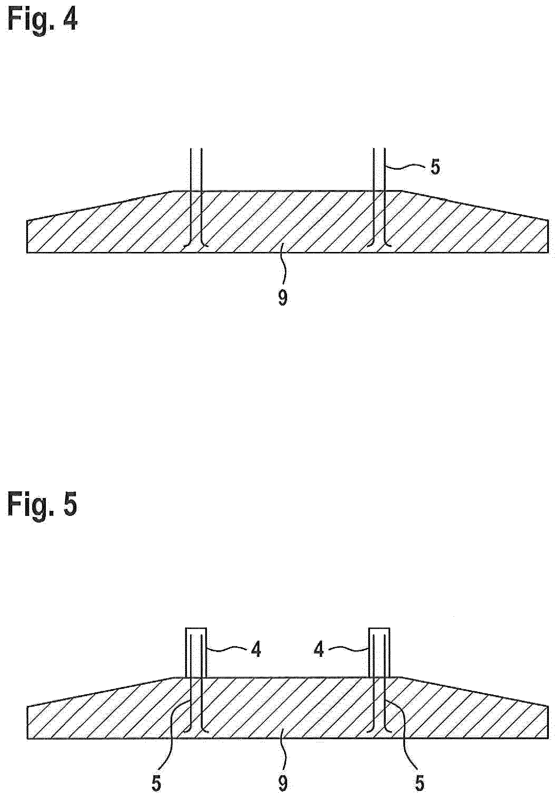

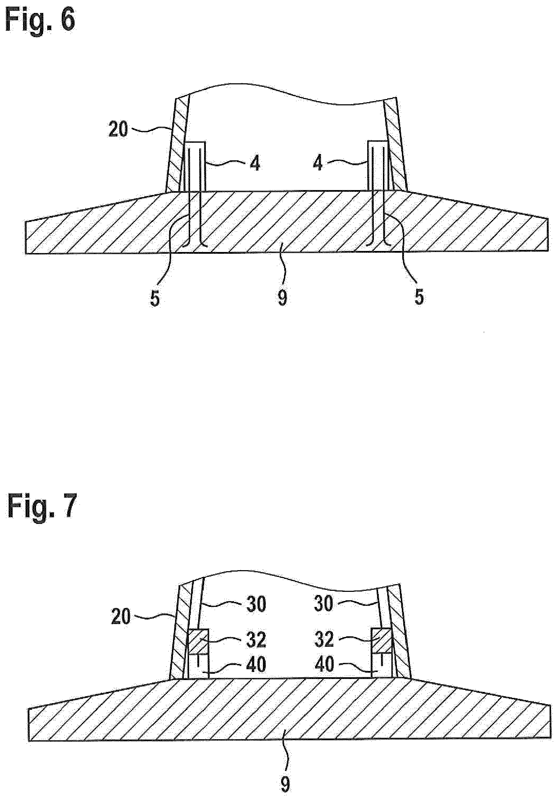

Es wird nachfolgend nunmehr zur Erläuterung des Verfahrens auf Figuren 4-7 Bezug genommen. Es wird in einem ersten Schritt ein Fundamentkörper 9 aus Beton hergestellt, und zwar ohne Keller. Der Fundamentkörper 9 weist eine durchgehende Oberseite 90 auf. An der oberen Seite des Fundamentkörpers 9 ist in kreisförmiger Anordnung eine Mehrzahl von Rückhängebewehrungen 5 vorgesehen, die jeweils mit ihrem unteren Ende in dem eigentlichen Fundamentkörper 9 einbetoniert sind.

In einem zweiten Schritt wird auf der Oberseite 90 des Fundamentkörpers 9 eine kreisförmige Wand (Ringwand 4) aus Stahlbeton hergestellt. In ihr ist das obere Ende der Rückhängebewehrung 5 aufgenommen zur Verankerung der Ringwand 4 auf der Oberseite 90 des Fundamentkörpers 9. Die Ringwand 4 ist so bemessen, dass sie im inneren Bereich des unteren Segments 20 des Betonturms 2 der Windenergieanlage 1 angeordnet ist. Umlaufend sind in der Ringwand 4 eine Vielzahl von Nischen 40 angeordnet. In diesen Nischen 40 werden später die Spannanker 30 montiert.

Anschließend wird in an sich herkömmlicher Weise der Betonturm 2 errichtet, in dem die weiter oben gelegenen Segmente 21 bis 22 sukzessive montiert werden. Dies erfolgt in an sich bekannter Weise und braucht daher nicht näher beschrieben zu werden.

Danach werden die Spannglieder 30 montiert und so angeordnet, dass sie von oben in die Ringwand 4 eindringen und dabei mit ihrem unteren Ende jeweils in einer der Nischen 40 angeordnet sind. Für die Anordnung der Spannglieder 30 in Bezug auf die Ringwand 4 wird verwiesen auf die Schnittdarstellung in der Draufsicht gemäß Figur 2, und für eine Seitenansicht wird verwiesen auf Figur 3, insbesondere dort die zweite Nische 40 von links.

Anschließend werden in den Nischen 40 Spannanker 32 auf die Spannglieder 30 gesetzt (siehe die dritte Nische 40 in der Darstellung gemäß Figur 3). Es werden dann schließlich die Spannglieder 30 vorgespannt mittels einer Spannpresse 34, welche ebenfalls in die Nische 40 mit eingebracht wird (siehe die Darstellung in der vierten Nische von links in Figur 3). Hierbei stützen sich erfindungsgemäß die Spannanker 32 innerhalb der Nischen an der Oberseite 42 der jeweiligen Nische 40 ab. Es kann so ohne Weiteres die erforderliche Spannkraft aufgebracht werden (vorzugsweise mittels besagter Spannpresse 34). Da die Ringwand 4 über die Rückhängebewehrung 5 fest mit dem Fundamentkörper 9 verbunden ist, ergibt sich somit erfindungsgemäß eine ausreichend gute Verankerung der Spannglieder 30, und zwar auch bei sehr hohen Spannkräften. Ein Verlegen des unteren Endes der Spannglieder 30 in einen Spannkeller des Fundamentkörpers 9 (wie aus dem Stand der Technik bekannt), ist dank der Erfindung nicht mehr erforderlich. Die erforderlichen Arbeiten können vollständig auf der Oberseite 90 des Fundamentkörpers 9 erfolgen. Die stellt eine beträchtliche Vereinfachung sowie Arbeitserleichterung dar.

Die Nischen 40 können als Durchgangsöffnungen ausgeführt sein, oder wie in dem dargestellten Ausführungsbeispiel als echte Nischen mit einer Rückwand. Die Größe der Nischen 40 und ihrer Abmessungen sind so gewählt, dass ausreichend Raum zur Aufnahme und Betätigung der Spannpresse 34 zum Spannen des jeweiligen Spannglieds 30 in der Nische 40 besteht.

Die Ringwand 4 braucht nicht einteilig ausgeführt sein. Bevorzugt kann sie auch aus mehreren Segmenten 4* bestehen, wie in Figur 2 schematisch durch entsprechende Doppelstriche 45 (an den 90° Positionen) dargestellt ist. Durch segmentweise Ausführung wird Transport und Aufstellung der Ringwand 4 dank der kleineren Abmessungen vereinfacht. Ferner kann vorgesehen sein, dass zwischen den Segmenten 4* größere Abstände bestehen.

Insbesondere der Aufbau der Ringwand 4 aus Segmenten 4* bietet den Vorteil, dass die Ringwand 4 aus Fertigteilen hergestellt werden kann. Die Verwendung von Ortbeton kann daher entfallen. Das ist besonders dann ein großer Vorteil, wenn der Turm 2 der Windenergieanlage ohnehin bereits aus Fertigteilen besteht. Abhängig von der Größe der Ringwand 4 kann auch die Ringwand 4 aus einem einzigen Fertigteil bestehen.

Bei einer typischen Windenergieanlage der Megawatt-Klasse (3 MW bis 6 MW) weist die Ringwand 4 vorzugsweise eine Höhe von etwa 1 bis 4 m auf. Die Breite der Ringwand beträgt etwa 40 cm bis 90 cm, vorzugsweise 50 cm bis 70 cm. Die Abmessungen der Nischen 40 sind im Grundsatz abhängig von der Größe der zu verwendenden Spannpressen und Spannanker gewählt, vorzugsweise weisen die Nischen 40 Abmessungen auf im Bereich von 0,7 × 0,7 m bis 1,5 × 1,5 m im Querschnitt.

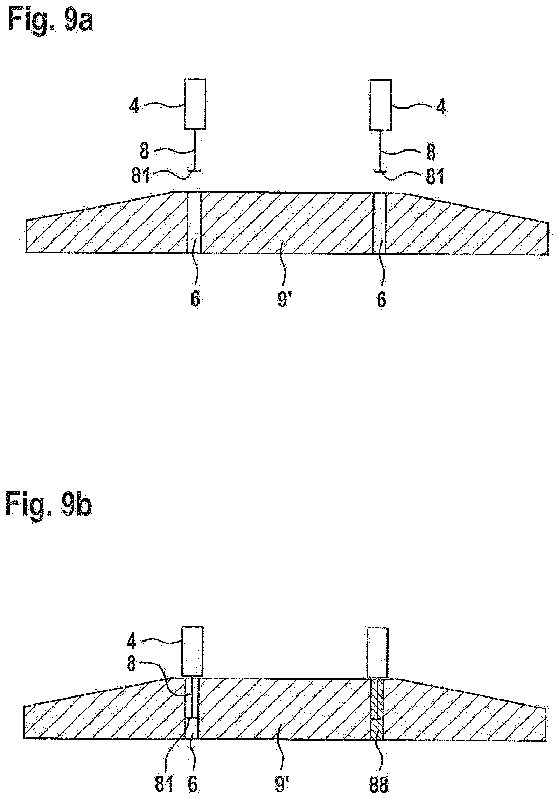

Ein weiteres Ausführungsbeispiel mit einer Variante der Erfindung ist in Figur 9 dargestellt. Sie unterscheidet sich von dem vorstehend beschriebenen Ausführungsbeispiel im Wesentlichen dadurch, dass keine Rückhängebewehrung in dem Fundamentkörper 9 einbetoniert ist. Stattdessen ist die Ringwand 4 mit einer Vielzahl von umlaufend angeordneten Ankerstäben 8 versehen, die nach unten abragen. An ihrem unteren, freien Ende sind Eingießplatten 81 angeordnet.

Zur Aufnahme der Ankerstäbe 8 mit den Eingießplatten 81 ist der Fundamentkörper 9' auf besondere Weise ausgebildet. Es werden bereits beim Herstellen des Fundamentkörpers 9' Köcher 6 kreisförmig in dem Bereich angeordnet, auf dem später die Ringwand 4 steht. Die Köcher 6 werden vertikal derart ausgerichtet, dass ihre offene Seite nach oben weist. Der von den Köchern 6 gebildete Kreis ist so gewählt, dass dessen Durchmesser und Positionierung übereinstimmt mit der später auf dem Fundamentkörper 9 anzuordnenden Ringwand 4. Die Köcher 6 sind fest in dem Fundamentkörper 9' verankert beispielsweise dadurch, dass sie mit ihrer Unterseite in eine unterliegende Sauberkeitsschicht (nicht dargestellt) eingelassen sind. Vorzugsweise reichen die Köcher 6 über die gesamte Höhe des Fundamentkörpers 9', erforderlich ist es jedoch nicht. Die Köcher 6 können mit Bewehrungselementen (nicht dargestellt) des Fundamentkörpers 9' verbunden sein.

Nachfolgend wird durch Eingießen von Beton in die Baugrube der eigentliche Fundamentkörper 9' geschaffen. Die Köcher 6 sind betondicht ausgeführt, d.h. beim Gießen des Betons für den Fundamentkörper 9' dringt kein Beton aus dem Außenraum um die Köcher 6 in den Innenraum der Köcher 6 ein. Durch die Köcher 6 entstehen dabei nach oben offene Hohlräume. Aufgrund der gewählten Anordnung der Köcher 6 entspricht die Anordnung dieser Hohlräume der Anordnung von den Ankerstangen 8 zur Befestigung der Ringwand 4 auf dem Fundamentkörper. Eine Querschnittsdarstellung des Fundamentkörpers 9' mit Schnittführung durch die Köcher 6 ist in Figur 9a dargestellt. Man erkennt im unteren Bildbereich den Fundamentkörper 9' mit den Köchern 6 und den durch sie geschaffenen, nach oben offenen Hohlräumen.

Nach dem Aushärten des Fundamentkörpers 9' wird die Ringwand 4 mit den nach unten abragenden Ankerstangen 8 (mittels eines Krans o.ä.) so positioniert, dass sich die Ankerstangen 8 über den ihnen jeweils zugeordneten Köchern 6 befinden. Es erfolgt im nächsten Schritt ein Ablassen der Ringwand 4 so weit, dass die Ankerstangen 8 mit ihren Eingießplatten 81 von oben in die Köcher 6 eintauchen. Die Köcher 6 sind zweckmäßigerweise im Querschnitt so bemessen, dass sie auf jeder Seite ca. 10 cm größer sind als die Ankerstangen 8 mit ihren Eingießplatten 81. Im dargestellten Ausführungsbeispiel weist der Köcher 6 eine Weite von 45 cm × 0,60 cm auf. Das Ablassen erfolgt so weit, bis die Ringwand 4 auf der Oberseite 90 des Fundamentkörpers 9' aufsteht.

Hat die Ringwand 4 ihre finale Position erreicht, wird Vergussmörtel 88 in die Köcher 6 eingefüllt, und damit die Ankerstangen 8 mit den Eingießplatten 81 fest mit dem Fundamentkörper 9' verbunden.

## Patentansprüche

1. Verfahren zum Aufstellen eines Windenergieanlagenturms auf einem Fundamentkörper (9), wobei der Windenergieanlagenturm zumindest teilweise als Betonturm mit einer Turmwandung (24) ausgeführt ist und mittels Spanngliedern und Spannankern auf einer Oberseite des Fundamentkörpers (9) befestigt wird,
wobei folgende Schritte durchgeführt werden:
Herstellen des Fundamentkörpers (9),
Erstellen einer zur Turmwandung benachbarten Ringwand (4) auf dem Fundamentkörper (9) die einen umlaufenden Nischenkranz mit einer Mehrzahl von Nischen (40) aufweist, Einbringen der Spannglieder (30) in die Ringwand (4) derart, dass ihre unteren Enden in die Nischen (40) ragen, Ansetzen von Spannankern (32) in die Nischen, und
Spannen von Spannglied (30) und Spannankern (32) nach Errichten des Betonturms.

2. Verfahren nach Anspruch 1, **gekennzeichnet durch** Verankern der Ringwand (4) mittels einer Rückhängebewehrung (5) auf dem Fundamentkörper (9), wobei vorzugsweise die Rückhängebewehrung (5) und die Nischen (40) abwechselnd angeordnet sind.

3. Verfahren nach Anspruch 2, **gekennzeichnet durch** Anordnung vertikaler Aussparungen im Fundamentkörper (9), insbesondere Köcher (6), bei der Herstellung des Fundamentkörpers (9), Aufstellen der Ringwand (4) auf dem Fundamentkörper (9) und Einbringen sowie Befestigen der Rückhängebewehrung (5) in den Köchern (6), insbesondere durch Vergießen, wobei vorzugsweise die Rückhängebewehrung (5) in der Ringwand (4) vormontiert ist.

4. Verfahren nach einem der vorangehenden Ansprüche, **dadurch gekennzeichnet, dass** die Ringwand (4) rund oder polygonal ausgeführt ist.

5. Verfahren nach einem der vorangehenden Ansprüche, **dadurch gekennzeichnet, dass** die Ringwand (4) vormontiert wird und als Fertigteil auf dem Fundamentkörper (9) angeordnet wird.

6. Verfahren nach einem der vorangehenden Ansprüche, **dadurch gekennzeichnet, dass** die Ringwand (4) in mehrere Segmente unterteilt ist, wobei vorzugsweise zwischen den Segmenten Lücken gebildet sind.

7. Verfahren nach einem der vorangehenden Ansprüche, **dadurch gekennzeichnet, dass** die Nischen (40) als Durchgangsöffnungen ausgeführt sind.

8. Verfahren nach einem der vorangehenden Ansprüche, **dadurch gekennzeichnet, dass** in der Ringwand (4) eine Aussparung für eine Zutrittsöffnung gebildet wird.

9. Verfahren nach einem der vorangehenden Ansprüche, **gekennzeichnet durch** Verwenden einer Schalung für die Ringwand (4), die kombiniert ist mit einer Schablone zum Montieren der Spannanker (32).

10. Verfahren nach einem der vorangehenden Ansprüche, **gekennzeichnet durch** Erstellen des Betonturmes aus Fertigteilen, vorzugsweise über dessen gesamte Höhe.

11. Verfahren nach einem der vorangehenden Ansprüche, **gekennzeichnet durch** Anpassen der Abmessungen und Form der Nischen (40) an ein Spannwerkzeug für die Spannanker (32).

12. Windenergieanlagenturm umfassend einen Betonturm (2) mit einer Turmwandung (24), die zumindest teilweise Spannbeton mit Spanngliedern (30) und Spannankern (32) umfasst, und einem Fundamentkörper (9), an dem die Spannglieder verankert sind,
**dadurch gekennzeichnet, dass**
im errichteten Zustand auf dem Fundamentkörper (9) eine zur Turmwandung (24) benachbarte Ringwand (4) mit einem umlaufenden Nischenkranz mit einer Mehrzahl von Nischen (40) vorgesehen ist, wobei die Nischen (40) zur Aufnahme der Spannanker (32) vorgesehen sind, und die mit ihrem unteren Ende in die Nischen (40) ragenden Spannglieder (30) mittels in den Nischen (40) angeordneter Spannanker (32) spannbar sind.

13. Windenergieanlagenturm nach Anspruch 12 , **dadurch gekennzeichnet, dass** die Ringwand (4) mittels Rückhängebewehrung (5) auf dem Fundamentkörper (9) befestigt ist.

## Claims

1. Method for erecting a wind turbine tower on a foundation body (9), wherein the wind turbine tower is at least partly made as a concrete tower with a tower wall (24) and is fixed to an upper side of the foundation body (9) by means of tensioning elements and prestressing anchors,
wherein the following steps are carried out:
producing the foundation body (9),
erecting an annular wall (4), which has a circumferential ring of niches with a plurality of niches (40) and is adjacent to the tower wall, on the foundation body (9),
introducing the tensioning elements (30) into the annular wall (4) in such a way that their lower ends project into the niches (40),
attaching prestressing anchors (32) in the niches, and
tensioning the tensioning element (30) and prestressing anchors (32) following the erection of the concrete tower.

2. Method according to Claim 1, **characterized by** anchoring the annular wall (4) on the foundation body (9) by means of reinforcing stirrups (5), wherein the reinforcing stirrups (5) and the niches (40) are preferably arranged alternately.

3. Method according to Claim 2, **characterized by** arranging vertical recesses in the foundation body (9), in particular sleeves (6), during the production of the foundation body (9), erecting the annular wall (4) on the foundation body (9) and introducing and securing the reinforcing stirrups (5) in the sleeves (6), in particular by casting, wherein the reinforcing stirrups (5) are preferably preassembled in the annular wall (4) .

4. Method according to one of the preceding claims, **characterized in that** the annular wall (4) is round or polygonal.

5. Method according to one of the preceding claims, **characterized in that** the annular wall (4) is preassembled and is arranged on the foundation body (9) as a finished part.

6. Method according to one of the preceding claims, **characterized in that** the annular wall (4) is subdivided into a plurality of segments, wherein gaps are preferably formed between the segments.

7. Method according to one of the preceding claims, **characterized in that** the niches (40) are designed as through openings.

8. Method according to one of the preceding claims, **characterized in that** a cut-out for an access opening is formed in the annular wall (4).

9. Method according to one of the preceding claims, **characterized by** using formwork for the annular wall (4), which is combined with a template for mounting the prestressing anchors (32) .

10. Method according to one of the preceding claims, **characterized by** erecting the concrete tower from finished parts, preferably over its entire height.

11. Method according to one of the preceding claims, **characterized by** adapting the dimensions and shape of the niches (40) to a tensioning tool for the prestressing anchors (32).

12. Wind turbine tower comprising a concrete tower (2) with a tower wall (24) which, at least partly, comprises prestressed concrete with tensioning elements (30) and prestressing anchors (32), and a foundation body (9) on which the tensioning elements are anchored,
**characterized in that**,
in the erected state on the foundation body (9), an annular wall (4), which has a circumferential ring of niches and is adjacent to the tower wall (24), is provided with a plurality of niches (40), wherein the niches (40) are provided to receive the prestressing anchors (32), and the tensioning elements (30) projecting into the niches (40) with their lower end can be clamped by means of prestressing anchors (32) arranged in the niches (40).

13. Wind turbine tower according to Claim 12, **characterized in that** the annular wall (4) is secured to the foundation body (9) by means of reinforcing stirrups (5).

## Revendications

1. Procédé, destiné à implanter une tour d'éolienne sur un corps de fondation (9), la tour d'éolienne étant réalisée au moins en partie avec une paroi (24) de tour et fixée au moyen d'éléments de serrage et d'ancres de serrage sur une face supérieure du corps de fondation (9),
étant réalisées les étapes suivantes consistant à :
fabriquer le corps de fondation (9),
créer sur le corps de fondation (9) une paroi annulaire (4) voisine de la paroi de tour, qui comporte une couronne de niches périphérique, pourvue d'une pluralité de niches (40),
introduire les éléments de serrage (30) dans la paroi annulaire (4), de telle sorte que leurs extrémités inférieures saillissent dans les niches (40),
positionner des ancres de serrage (32) dans les niches, et
serrer l'élément de serrage (30) et les ancres de serrage (32) après avoir érigé la tour en béton.

2. Procédé selon la revendication 1, **caractérisé par** l'ancrage de la paroi annulaire (4) au moyen d'une armature pendante arrière (5) sur le corps de fondation (9), de préférence, l'armature pendante arrière (5) et les niches (40) étant placées en alternance.

3. Procédé selon la revendication 2, **caractérisé par** le placement de cavités verticales dans le corps de fondation (9), notamment de logements (6), lors de la fabrication du corps de fondation (9), l'implantation de la paroi annulaire (4) sur le corps de fondation (9) et l'introduction, ainsi que la fixation de l'armature pendante arrière (5) dans les logements (6), notamment par coulage, de préférence, l'armature pendante arrière (5) étant préalablement montée dans la paroi annulaire (4) .

4. Procédé selon l'une quelconque des revendications précédentes, **caractérisé en ce que** la paroi annulaire (4) est réalisée de forme ronde ou polygonale.

5. Procédé selon l'une quelconque des revendications précédentes, **caractérisé en ce que** l'on monte préalablement la paroi annulaire (4) et on la place en tant que pièce préfabriquée sur le corps de fondation (9).

6. Procédé selon l'une quelconque des revendications précédentes, **caractérisé en ce que** la paroi annulaire (4) est divisée en plusieurs segments, des vides étant constitués entre les segments.

7. Procédé selon l'une quelconque des revendications précédentes, **caractérisé en ce que** les niches (40) sont réalisées sous la forme d'ouvertures de passage.

8. Procédé selon l'une quelconque des revendications précédentes, **caractérisé en ce que** l'on constitue dans la paroi annulaire (4) une cavité pour une ouverture d'accès.

9. Procédé selon l'une quelconque des revendications précédentes, **caractérisé par** l'utilisation d'un coffrage pour la paroi annulaire (4), qui est associé avec un gabarit pour le montage des ancres de serrage (32).

10. Procédé selon l'une quelconque des revendications précédentes, **caractérisé par** la création de la tour en béton à partir de pièces préfabriquées, de préférence sur l'ensemble de sa hauteur.

11. Procédé selon l'une quelconque des revendications précédentes, **caractérisé par** l'adaptation des dimensions et de la forme des niches (40) à un outil de serrage pour les ancres se serrage (32).

12. Tour d'éolienne, comprenant une tour en béton (2) pourvue d'une paroi (24) de tour, qui comprend au moins partiellement du béton précontraint avec des éléments de serrage (30) et des ancres se serrage (32) et un corps de fondation (9), sur lequel sont ancrés les éléments de serrage,
**caractérisée en ce que**
à l'état érigé sur le corps de fondation (9), il est prévu une paroi annulaire (4) voisine de la paroi (24) de tour, pourvue d'une couronne de niches périphériques avec une pluralité de niches (40), les niches (40) étant prévues pour recevoir les ancres de serrage (32), et les éléments de serrage (30) saillant par leurs extrémités inférieures dans les niches (40) pouvant être serrés au moyen d'ancres de serrage (32) placées dans les niches (40).

13. Tour d'éolienne selon la revendication 12, **caractérisée en ce que** la paroi annulaire (4) est fixée au moyen d'une armature pendante arrière (5) sur le corps de fondation (9).
